# FASCICULE DE BREVET EUROPEEN

(11) **EP 1 342 440 B1**
(45) Date de publication et mention de la délivrance du brevet: **01.09.2010**
(21) Numéro de dépôt: 03356042.6
(22) Date de dépôt: 10.03.2003
(51) Int. Cl.: A47J 27/08

(54) **Appareil de cuisson d'aliments sous pression comportant un module de couvercle**
Dampfdruck-Kochgerät mit einem Deckelmodul
Apparatus for cooking foods under pressure comprising a lid-module

(30) Priorité: 08.03.2002 FR 0203089
(43) Date de publication de la demande: 10.09.2003
(60) Demande divisionnaire: 09006219.1
(73) Titulaire: SEB S.A., 69132 Ecully Cedex (FR)
(72) Inventeur: Cartigny, Michel Pierre, 21310 Mirebeau sur Beze (FR); Chameroy, Eric, 21260 Veronnes (FR)
(74) Mandataire: Martin, Didier Roland Valéry

(56) Documents cités:
- EP-A- 1 029 483

## Description

La présente invention se rapporte au domaine technique général des appareils de cuisson domestiques sous pression comprenant une cuve et un couvercle destiné à être verrouillé sur la cuve pour former une enceinte de cuisson étanche, lesdits appareils étant destinés à assurer la cuisson sous pression de vapeur des aliments contenus dans la cuve.

La présente invention concerne un appareil domestique de cuisson d'aliments sous pression, du genre autocuiseur, comportant au moins :
- une cuve et un couvercle destiné à être rapporté et verrouillé sur ladite cuve pour former une enceinte de cuisson étanche,
- une ou plusieurs mâchoire(s) pour verrouiller le couvercle relativement à la cuve,
- un moyen d'entraînement de ladite au moins une mâchoire entre une position de verrouillage et une position de déverrouillage.

La présente invention concerne également un module pour appareil domestique de cuisson d'aliments destiné à être utilisé et monté sur un couvercle d'appareil de cuisson sous pression.

On connaît déjà, notamment d'après la demande de brevet WO-96/01069 du même demandeur, des appareils de cuisson sous pression comportant une cuve, un couvercle et un dispositif de verrouillage du couvercle sur la cuve comprenant :
- deux mâchoires montées radialement mobiles en opposition sur le couvercle, entre une position de verrouillage du couvercle sur la cuve et une position de déverrouillage,
- un moyen de commande du mouvement des mâchoires, de façon à leur faire assurer l'une ou l'autre de leur position de verrouillage ou déverrouillage,
- des bras entraîneurs solidaires de chaque mâchoire, au moins l'un des bras étant pourvu d'une lumière de verrouillage,
- au moins une soupape de verrouillage apte à coopérer avec ladite lumière de verrouillage pour verrouiller les mâchoires en position de verrouillage.

Le moyen de commande, ainsi qu'au moins la soupape de verrouillage sont montés sur le couvercle de ces autocuiseurs connus.

Le couvercle de ces appareils connus intègre par conséquent une série de dispositifs assurant diverses fonctions pour l'utilisateur, dont au moins les fonctions de commande d'ouverture / fermeture ou de sécurité à l'ouverture et à la fermeture en cas de mauvaise fermeture.

Le couvercle de ces appareils connus peut également intégrer d'autres dispositifs assurant d'autres fonctions pour l'utilisateur, telles que des fonctions de régulation, de sécurité ou de pilotage.

Les dispositifs précités, qui assurent pour la plupart d'entre eux, directement ou indirectement, des fonctions de sécurité, doivent dans la mesure du possible éviter de subir des sollicitations thermiques ou mécaniques inutiles, qui risqueraient de les faire vieillir prématurément, voire de les endommager.

Par conséquent, la présence de tels dispositifs sur le couvercle de ces autocuiseurs à mâchoires connus, qui par ailleurs donnent toute satisfaction, interdit le lavage fréquent de ces couvercles au lave-vaisselle, afin de préserver les dispositifs susmentionnés.

De plus, les fonctions dévolues à ces dispositifs, notamment celle d'ouverture / fermeture, imposent des formes de pièces particulières, présentant des cavités, interstices et recoins qui seront propices à l'accumulation de résidus alimentaires ou autres, lors d'un lavage en lave-vaisselle. Il va sans dire que la présence de tels résidus est susceptible, à plus ou moins long terme, de nuire au bon fonctionnement de l'autocuiseur, notamment du point de vue de sa sécurité d'utilisation.

Quoi qu'il en soit, l'encombrement de ces dispositifs, en dehors de toute autre considération, limite fortement, voire interdit à lui seul le lavage en lave-vaisselle du couvercle des appareils à mâchoires existants.

Par ailleurs, les signes distinctifs d'appartenance à une gamme commerciale des autocuiseurs connus décrits précédemment sont généralement situés sur les pièces assurant les fonctions pour l'utilisateur mentionnés ci-dessus. En effet, ces pièces se prêtent plus aisément que le couvercle lui-même, et à moindre coût, à des travails de forme, de couleur, ou encore d'aspect de surface, qui permettent d'identifier clairement un produit de manière visuelle. Pour des raisons de standardisation industrielle, il est dès lors intéressant, pour une taille d'autocuiseur donnée, de produire un modèle unique de couvercle et de cuve, la différenciation des produits se faisant par l'apport de pièces externes, par exemple celles assurant les fonctions pour l'utilisateur.

Il s'avère donc particulièrement intéressant de pratiquer le plus tard possible cette opération industrielle de différenciation des produits, afin de bénéficier d'une souplesse de stock maximale et d'ajuster au mieux la production de tel ou tel autocuiseur en fonction des demandes du marché.

Cependant, le montage d'éléments de commande, de régulation, de sécurité ou de pilotage sur le couvercle d'un autocuiseur s'avère généralement complexe du point de vue industriel, notamment du fait de la nature très différente desdits éléments et du couvercle, les premiers étant généralement constitués d'assemblages majoritairement en matière plastique relevant de la micromécanique, tandis que le couvercle est issu d'un procédé de transformation de métal relevant de la métallurgie. Il est donc généralement nécessaire de commencer à doter le couvercle avec les éléments assurant les fonctions pour l'utilisateur à un stade relativement précoce du processus de production.

Par conséquent, une démarche industrielle visant à différencier les produits en toute fin de processus, en un temps acceptable pour ne pas grever les délais de livraison, s'avère extrêmement difficile, voire impossible à mettre en oeuvre pour les autocuiseurs à mâchoires connus.

Les objets assignés à l'invention visent en conséquence à remédier aux différents inconvénients énumérés précédemment, et à proposer un nouvel appareil de cuisson sous pression à fermeture à mâchoires, dont le nettoyage est facilité et dont la conception permet une grande souplesse de différenciation des produits, ainsi qu'un montage facilité.

Un autre objet de l'invention vise à proposer un nouvel appareil de cuisson sous pression à fermeture à mâchoires, dont la conception est simplifiée.

Un autre objet de l'invention vise à proposer un nouvel appareil de cuisson sous pression à fermeture à mâchoires particulièrement robuste et compact.

Un autre objet de l'invention vise à proposer un nouvel appareil de cuisson sous pression à fermeture à mâchoires, dont le déplacement des mâchoires est facilité.

Un autre objet de l'invention vise à proposer un nouvel appareil de cuisson sous pression à fermeture à mâchoires, dont le niveau de sécurité et de fiabilité est amélioré.

Les objets assignés à l'invention sont atteints à l'aide d'un appareil de cuisson sous pression conforme à l'objet de la revendication 1.

Les objets assignés à l'invention sont également atteints à l'aide d'un module conforme à l'objet de la revendication 18.

D'autres objets et avantages particuliers de l'invention apparaîtront plus en détails à la lecture de la description qui suit, et à l'aide des dessins annexés ci-après, à titre purement illustratif et non limitatif, dans lesquels :

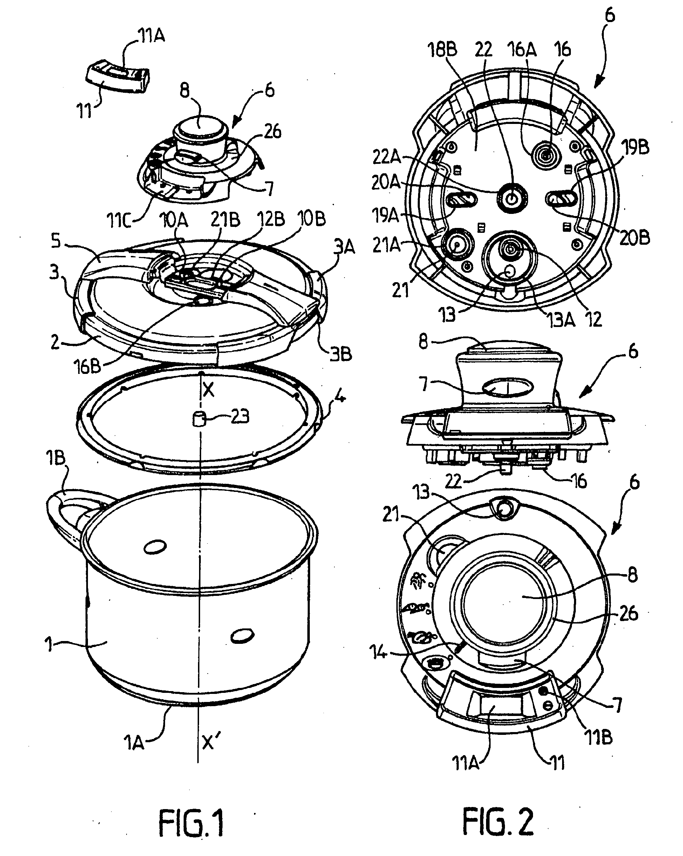

- La figure 1 illustre, selon une vue éclatée en perspective générale, les différents éléments constituant un autocuiseur conforme à l'invention.
- La figure 2 illustre un module destiné à être rapporté et fixé de façon amovible sur le couvercle d'un autocuiseur conforme à l'invention, selon une vue (de haut en bas) de dessous, de côté et de dessus.
- La figure 3 illustre, selon une vue partielle schématique en perspective, un détail de réalisation du dispositif de commande du verrouillage / déverrouillage du couvercle d'un autocuiseur conforme à l'invention.
- La figure 4 illustre, selon une vue en coupe transversale partielle, les détails de montage d'un capteur de température sur un module de couvercle d'un autocuiseur conforme à l'invention.
- La figure 5 illustre, selon une vue en perspective, le couvercle d'un autocuiseur conforme à l'invention.
- La figure 6 illustre une variante de réalisation d'une partie du dispositif de commande du verrouillage / déverrouillage du couvercle d'un autocuiseur conforme à l'invention.
- La figure 7 montre un détail de réalisation d'une variante d'un dispositif de commande du verrouillage / déverrouillage du couvercle d'un autocuiseur conforme à l'invention.
- La figure 8 est un schéma de principe d'un détail de réalisation du dispositif de commande du mouvement des mâchoires d'un autocuiseur conforme à l'invention.

L'appareil de cuisson conforme à l'invention est destiné à assurer la cuisson de différents aliments, sous pression, dans un contexte domestique.

L'appareil de cuisson comprend une cuve 1 de forme sensiblement cylindrique d'axe de symétrie (et de révolution) X-X', sur laquelle un couvercle 2 est destiné à être rapporté de manière étanche.

Par la suite, l'adjectif « *axial* » se référera à la direction de cet axe de symétrie, qui s'apparente à la direction verticale lorsque l'autocuiseur est en fonctionnement normal.

La cuve 1 est de manière classique réalisée à partir d'un matériau métallique tel que l'acier inoxydable et pourvu d'un fond thermo-conducteur 1A solidaire de la cuve 1 par exemple par frappe à chaud.

La cuve 1 comporte également des organes de préhension tels que des poignées 1B fixées sur les parois de la cuve 1.

Le couvercle 2 est de forme générale discoïde, et est verrouillé sur la cuve 1 grâce à au moins une mâchoire 3 montée mobile entre une position de verrouillage, dans laquelle le couvercle est solidarisé à la cuve, et une position de déverrouillage, dans laquelle le couvercle peut être retiré de la cuve.

La mâchoire 3 se présente de manière classique sous la forme de segments de profils en U adaptés à la forme du récipient, et dans le cas montré aux figures, sous la forme d'arcs de cercles, éventuellement échancrés, de longueur déterminée.

La mâchoire 3 comporte un rebord inférieur 3B et un rebord supérieur 3A permettant d'enserrer respectivement le rebord périphérique de la cuve 1 et le rebord périphérique du couvercle 2.

L'appareil de cuisson d'aliments sous pression selon l'invention est défini dans la revendication 1 et comporte au moins :
- une cuve de cuisson 1 et un couvercle 2 destiné à être rapporté sur la cuve 1 pour former une enceinte de cuisson étanche,
- une ou plusieurs mâchoire(s) 3 pour verrouiller le couvercle 2 relativement à la cuve 1,
- un moyen d'entraînement 5 de ladite au moins une mâchoire 3 entre une position de verrouillage et une position de déverrouillage.

L'étanchéité est ainsi obtenue par verrouillage du couvercle 2 sur la cuve 1, le couvercle 2 étant doté d'un moyen d'étanchéité constitué par exemple par un joint d'étanchéité annulaire 4 de couvercle.

Selon une caractéristique essentielle de l'invention, l'appareil de cuisson sous pression comporte au moins un module 6 destiné à être rapporté et fixé de façon amovible sur le couvercle 2.

Au sens de l'invention, on désigne par module un composant élémentaire et unitaire, du genre platine, qui est apte à être intimement combiné au couvercle 2, de façon à former avec ce dernier un ensemble unitaire au caractère éventuellement monobloc.

En d'autres termes, un module désigne donc ici un sous-ensemble sensiblement monobloc, formant une unité identifiable, que l'on peut juxtaposer ou combiner aux autres éléments constitutifs du système que forme l'autocuiseur.

L'amovibilité du module correspond pour ce dernier à une faculté d'être monté et démonté facilement et à volonté sur le couvercle, par l'intermédiaire ou non d'un outillage adapté, et de préférence manuellement.

Selon une caractéristique importante de l'appareil de cuisson sous pression selon l'invention, le module 6 comprend au moins un dispositif de commande 7, 8, 17 du verrouillage / déverrouillage du couvercle 2 relativement à la cuve 1.

Ainsi, selon l'invention, le couvercle 2 d'une part et le module 6 d'autre part sont chacun dotés de moyens d'interfaçage mécanique 10A, 10B, 20A, 20B, qui coopèrent lorsque le module 6 est rapporté et fixé au couvercle 2, de façon à ce que la commande de verrouillage ou de déverrouillage prescrite par l'utilisateur soit répercutée, via le moyen d'entraînement 5, sur la ou les mâchoire(s) 3, en provoquant son (leur) ouverture (mise en position de déverrouillage) ou sa (leur) fermeture (mise en position de verrouillage), selon la nature de l'ordre prescrit par l'utilisateur.

Avantageusement, le module 6 de l'appareil de cuisson selon l'invention comprend un minuteur 11. De façon préférentielle, le minuteur 11 sera un minuteur monté de façon amovible sur le module 6, de façon à ce que l'utilisateur puisse l'extraire de l'autocuiseur pour le conserver sur ou près de lui.

Au sens de l'invention, on désigne par minuteur tout appareil doté de moyens permettant le décompte du temps, par toute manière que ce soit (mécanique, électronique ou autre). De façon préférentielle, le minuteur 11 est pourvu d'un écran LCD 11A de lecture d'information (de temps notamment) et de boutons 11B permettant d'effectuer différents réglages, de durée par exemple.

Avantageusement, le module 6 de l'appareil de cuisson sous pression incorpore une soupape de régulation de pression 12 équipée d'un joint d'étanchéité 12A. Par « *incorporer* »*,* on entend que la soupape de régulation de pression 12 fait partie intégrante du module 6. La soupape 12 est agencée au sein du module 6, de façon à être en communication étanche avec une ouverture de régulation 12B, ménagée dans le couvercle 2, lorsque le module 6 est rapporté et fixé audit couvercle 2. La soupape 12 est sensible à la pression régnant dans l'enceinte de cuisson et est montée mobile entre deux positions stables de butée, la première dans laquelle elle ferme la communication de l'enceinte vers l'extérieur de l'appareil tant que la pression interne est inférieure à une pression prédéterminée P₁, la deuxième dans laquelle elle met en communication l'intérieur de l'enceinte avec l'extérieur de l'appareil, par une sortie de vapeur 13, dès que la pression interne atteint sensiblement la pression prédéterminée P₁.

Selon une variante préférentielle de l'invention, la pression P₁ sera choisie comme étant la pression de cuisson normale de l'autocuiseur.

De tels dispositifs de soupape sont bien connus de l'homme du métier, et visent à obtenir une régulation de la pression de cuisson qui doit être maintenue en deçà d'un seuil prédéterminé P₁, valeur à partir de laquelle la soupape 12 assure une fuite de vapeur régulant la pression interne de l'autocuiseur.

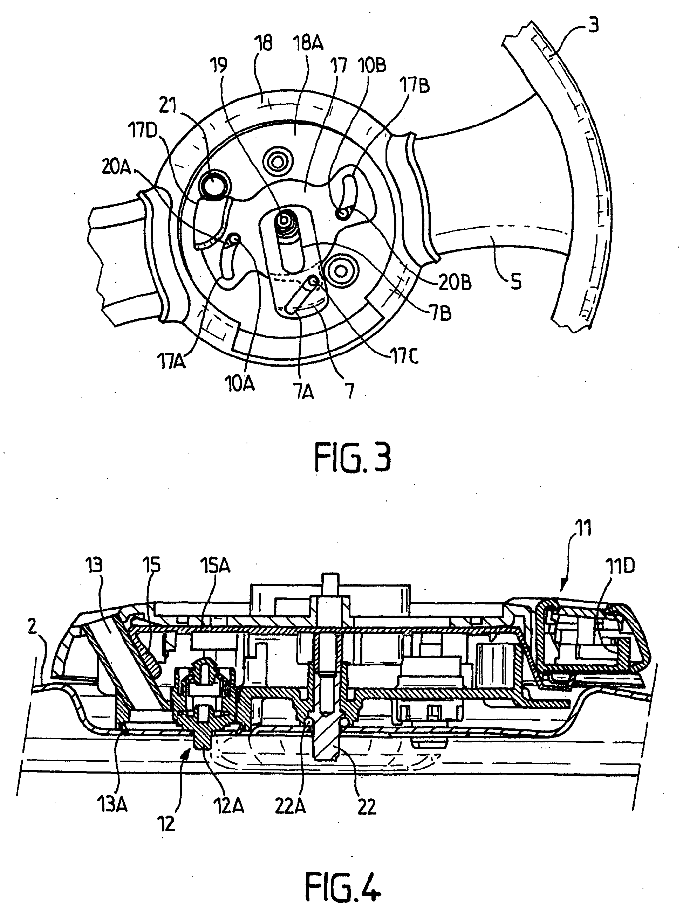

Tel qu'illustré à la figure 4 par exemple, la soupape 12 pourra être avantageusement une soupape à poids ou à ressort de compression montée mobile dans un puits, entre une position stable de butée illustrée à la figure 4, dans laquelle est repose sous son propre poids sur une assise ménagé autour de l'ouverture 12B de régulation, par perçage dans le couvercle 2.

La soupape 12 peut également occuper une position haute de butée (non représentée aux figures) sous l'effet de la pression interne de fonctionnement de l'autocuiseur, lorsque cette dernière atteint ou dépasse la valeur prédéterminée P₁ de fonctionnement. Dans cette position, la soupape 12 s'élève et dégage l'ouverture de régulation 12B, à travers laquelle la vapeur peut s'échapper vers l'extérieur, à travers l'ouverture 12B par une sortie de vapeur 13, située immédiatement ou au voisinage proche de ladite ouverture de régulation 12, et en communication étanche avec celle-ci, grâce à un joint d'étanchéité 13A.

Tel que cela est bien connu de l'homme du métier, la soupape 12 peut être pourvue d'un système de tarage, permettant à l'utilisateur de sélectionner une pression de cuisson prédéterminée P₁ parmi un choix de deux, voire plusieurs niveaux de pression, via un organe de sélection de pression 14 incorporé dans le module 6, en fonction du type d'aliments présents dans l'autocuiseur.

Avantageusement, le module 6 incorpore un ou plusieurs capteur(s) destiné(s) à fournir des informations concernant les conditions physiques régnant dans l'enceinte de cuisson. Ce(s) capteur(s) peut (peuvent) ainsi consister en un capteur de pression et/ou en un capteur de température.

De façon préférentielle, le module 6 de l'appareil de cuisson selon l'invention incorpore un capteur de température 15 disposé au voisinage de la sortie de vapeur 13, pour permettre de capter l'augmentation de température résultant du passage de la vapeur à travers la sortie de vapeur 13.

Grâce à cette disposition, il est possible d'obtenir, de manière particulièrement simple et fiable, une information en temps réel de l'atteinte de la température correspondant à la pression de fonctionnement, en l'occurrence par exemple de cuisson de l'appareil, le dégagement de vapeur étant brutal et s'accompagnant d'une élévation également brutale et rapide de la température, suite au déclenchement de la soupape 12.

Tel qu'illustré à la figure 4, le capteur 15 de température sera avantageusement relié fonctionnellement au minuteur 11, de manière à assurer le déclenchement de ce dernier dès la captation de l'augmentation de température.

Grâce à cette disposition, le décompte du temps de cuisson est alors déclenché de manière automatique, sans aucune intervention de l'utilisateur.

Le capteur 15 utilisé pourra être avantageusement un capteur de type CTN relié fonctionnellement par une connectique 15A appropriée, et via une électronique de traitement, au minuteur 11.

Avantageusement, le module 6 est pourvu d'un logement 11C de réception du minuteur 11. De façon préférentielle, le logement 11C est pourvu d'au moins un plot de connexion électrique relié fonctionnellement au capteur de température. De façon encore plus préférentielle, le au moins un plot de connexion est un connecteur mâle 11 D. Ainsi, il sera particulièrement avantageux de pourvoir le minuteur 11 d'au moins un connecteur femelle (non représenté) destiné à venir en contact avec le au moins un connecteur mâle 11D relié à la connectique 15A et disposé dans le logement 11C pour assurer la connexion électrique avec le capteur 15.

A titre de variante, le capteur de température 15 peut être relié à un organe autre qu'un minuteur, et par exemple à un dispositif de sécurité signalant par exemple, de manière sonore, l'atteinte d'une pression prédéterminée critique ou d'une température prédéterminée critique.

Avantageusement, le module 6 de l'appareil de cuisson selon l'invention incorpore une soupape de sécurité à la surpression 16, qui est agencée au sein du module 6 de façon à être en communication étanche lorsque le module 6 est rapporté et fixé au couvercle 2, par l'intermédiaire d'un joint d'étanchéité 16A avec une ouverture de décompression 16B ménagée dans le couvercle 2.

La soupape de sécurité à la surpression 16 est sensible à la pression régnant dans l'enceinte de cuisson et est montée mobile entre deux positions stables de butée, la première dans laquelle ladite soupape de sécurité 16 ferme la communication de l'enceinte de cuisson avec l'extérieur tant que la pression interne est inférieure à une pression prédéterminée P₂, la deuxième dans laquelle elle met en communication l'intérieur de l'enceinte avec l'extérieur, dès que la pression interne atteint sensiblement la pression prédéterminée P₂.

La soupape de sécurité à la surpression 16 peut être une soupape à poids, à ressort ou une soupape par éjection de pièces ou fusion.

De tels dispositifs sont bien connus de l'homme du métier et visent à obtenir une sécurité à la surpression, notamment dans le cas où le dispositif de régulation de la pression de cuisson n'aurait pas fonctionné.

A titre de variante complémentaire, il est envisageable que le module 6 incorpore le moyen d'entraînement 5 de la au moins une mâchoire 3.

Dans ce cas, seule la au moins une mâchoire 3 est montée à demeure sur le couvercle 2, avec un moyen d'interfaçage mécanique permettant de réaliser une liaison d'entraînement entre la au moins une mâchoire 3 et le moyen d'entraînement 5 solidaire du module 6.

Dans une autre variante, le module 6 incorpore la au moins une mâchoire 3, le moyen d'entraînement 5 étant solidaire du couvercle 2, avec un moyen d'interfaçage mécanique permettant de réaliser une liaison d'entraînement entre le moyen d'entraînement 5 et la au moins une mâchoire 3 solidaire du module 6.

Selon une variante préférentielle, le module 6 incorpore à la fois le moyen d'entraînement 5 et la au moins une mâchoire 3, le couvercle 2 se réduisant ainsi à une pièce très simple, éventuellement pourvue de moyens de guidage du moyen d'entraînement 5.

Avantageusement, la au moins une mâchoire 3 est montée mobile en translation par au moins un bras entraîneur respectif 5, entre la position de verrouillage et la position de déverrouillage.

De manière préférentielle, la au moins une mâchoire 3 est montée mobile en translation selon une direction sensiblement radiale. Le dispositif de commande du verrouillage / déverrouillage 7, 8, 17 peut être de tout type connu de l'homme du métier, et par exemple semblable à l'un de ceux décrits dans la demande de brevet WO-96/01069 du même demandeur, c'est-à-dire comprenant un organe de commande 7 du déplacement des mâchoires 3 monté mobile radialement et engageant le moyen d'entraînement 5 de façon à commander son déplacement radial.

De façon particulièrement avantageuse, le dispositif de commande du verrouillage / déverrouillage comprend un organe de commande principal 7 monté mobile en translation et une pièce de transmission intermédiaire 17 positionnée en rotation libre relativement à l'organe de commande principal 7 et au moyen d'entraînement 5, de manière à être entraînée en rotation par l'organe de commande principal 7 pour engager le moyen d'entraînement 5, de façon à en régir son déplacement.

Avantageusement, le module 6 de l'appareil de cuisson selon l'invention incorpore un moyen de sécurité à la fermeture / ouverture 21, du genre doigt ou clapet. Ce moyen de sécurité à la fermeture / ouverture 21 est agencé au sein du module 6 de façon à être en communication étanche, par l'intermédiaire d'un joint 21A avec une ouverture de sécurité 21B ménagée dans le couvercle 2, lorsque le module 6 est rapporté et fixé au couvercle 2.

La position du moyen de sécurité 21 est sensible à la pression ou à la température régnant dans l'enceinte de cuisson. Le moyen de sécurité 21 est monté mobile entre deux positions stables de butée, la première dans laquelle ledit moyen de sécurité 21 met en communication l'intérieur de l'enceinte avec l'extérieur en deçà d'une pression interne P₃ prédéterminée, la seconde dans laquelle il ferme la communication de l'enceinte avec l'extérieur lorsque la pression P₃ est atteinte, pour permettre la montée en pression de l'appareil et la cuisson.

De tels moyens de sécurité à la fermeture / ouverture sont bien connus de l'homme du métier et permettent de s'assurer que le couvercle est bien en position de verrouillage stable sur la cuve, le moyen de sécurité ne pouvant se déplacer sous l'effet de la pression que si ladite position stable de verrouillage est effectivement atteinte.

Ceci permet d'éviter une montée en pression alors qu'une mauvaise position de verrouillage est atteinte. Inversement, le montage de tels moyens de sécurité à la fermeture / ouverture évite une ouverture de l'appareil inopinée, alors qu'une pression résiduelle demeure dans l'appareil, puisque seule la position basse du moyen de sécurité 21 permet l'ouverture de l'appareil. De façon préférentielle, le moyen de sécurité à l'ouverture / fermeture 21 est constitué par un système de tige manométrique, du genre doigt d'Aroma.

Avantageusement, la pièce de transmission intermédiaire 17 est conformée de façon à coopérer avec le moyen de sécurité 21 pour que ce dernier empêche la rotation libre de la pièce de transmission intermédiaire 17, et donc le déverrouillage du couvercle 2 lorsque la pression interne est supérieure ou égale à la pression P₃, tel que cela est représenté à la figure 3.

De façon préférentielle, la pièce de transmission intermédiaire 17 est également conformée pour empêcher le moyen de sécurité 21 d'atteindre la position dans laquelle il ferme la communication de l'enceinte avec l'extérieur, lorsque la pièce de transmission intermédiaire 17 se trouve dans une position autre que celle correspondant au verrouillage.

De façon préférentielle, tel que cela est représenté à la figure 3, le bord 17D de la pièce de transmission intermédiaire 17 qui est au voisinage du doigt de sécurité 21, présente une forme incurvée vers l'intérieur, qui s'apparente à une conformation concave, de façon à autoriser une course verticale libre du doigt de sécurité 21. Une fois le doigt 21 en position haute de butée, la pièce de transmission intermédiaire 17 ne sera plus libre en rotation, puisqu'elle sera bloquée par le bord 17D qui butera latéralement contre le doigt 21.

Dans le cas où les mâchoires 3 ne sont pas en position de fermeture, la pièce de transmission intermédiaire 17 ne se trouve pas dans la configuration représentée à la figure 3, mais dans une position où le bord 17D surplombe en partie ou totalement le doigt de sécurité 21, de sorte que celui-ci ne peut effectuer de course verticale libre sans buter contre le bord 17D. Ainsi, dans ce cas de figure, le doigt de sécurité 21 est incapable d'atteindre sa position haute de butée dans laquelle il ferme la communication de l'enceinte avec l'extérieur.

Ainsi, la montée en pression de l'appareil et la cuisson ne peuvent s'effectuer normalement lorsque la pièce de transmission intermédiaire 17 se trouve dans une position autre que celle correspondant au verrouillage des mâchoires 3.

L'utilisation d'une pièce de transmission intermédiaire rotative s'avère donc particulièrement intéressante, puisqu'il suffit de bloquer cette pièce pour bloquer les mâchoires. La pièce de transmission intermédiaire concourt donc à faciliter l'intégration du moyen de sécurité à l'ouverture / fermeture 21 dans le module 6.

Avantageusement, le module 6 de l'appareil de cuisson selon l'invention incorpore un moyen de fuite bistable, qui est agencé au sein du module 6 de façon à être en communication étanche avec une ouverture de fuite ménagée dans le couvercle.

Le moyen de fuite bistable est susceptible de prendre d'une part une position d'ouverture autorisant une fuite d'air de l'intérieur de l'enceinte de cuisson vers l'extérieur ou, d'autre part, une position de fermeture correspondant à une absence de fuite d'air vers l'extérieur.

De tels systèmes sont bien connus de l'homme du métier. Ils réagissent à la montée progressive en température et/ou en pression et permettent d'évacuer une quantité d'un mélange air / vapeur hors du milieu gazeux de cuisson, de façon à optimiser la cuisson des aliments, c'est-à-dire à permettre une cuisson rapide tout en préservant les qualités nutritionnelles des aliments, et notamment leurs teneurs en vitamines.

De façon préférentielle, le moyen de fuite bistable est un moyen de purge de l'air de l'appareil, c'est-à-dire qu'il permet d'assurer, de manière maîtrisée, une purge d'air aussi complète que possible de l'appareil sous pression. Le principe général d'un tel système de purge repose sur la réalisation d'un moyen de fuite calibré permettant de laisser échapper l'air jusqu'à une température ou une pression donnée où le moyen de fuite se ferme. A partir de cet instant, la montée simultanée de la pression et de la température au sein de l'appareil permet d'obtenir au total un temps de cuisson court.

De tels systèmes sont bien connus de l'homme du métier. Ainsi, un moyen de fuite calibré bistable utilisable dans le cadre de l'invention peut être susceptible de prendre d'une part une position d'ouverture dans laquelle la montée continue en pression de l'appareil au-delà d'une pression P₄ déterminée est permise, tout en autorisant une purge de l'air de l'appareil ou, d'autre part, une position de fermeture correspondant à une absence de fuite d'air vers l'extérieur, ladite position d'ouverture étant maintenue pendant un intervalle de temps Δt prédéterminé après l'atteinte de P₄ ou de sa valeur de température correspondante T₄, ou jusqu'à l'atteinte de valeurs prédéterminées de pression ou de température régnant dans l'appareil, respectivement P₅ et T₅, avec P₅>P₄ et T₅>T₄.

Avantageusement, le moyen de fuite bistable est intégré dans le moyen de sécurité à l'ouverture / fermeture 21. Ainsi, dans le cas où le moyen de sécurité 21 est une tige manométrique, le moyen de fuite bistable peut être intégré dans cette tige manométrique et comporter, en tant qu'élément d'obturation mobile, un bilame supporté par ladite tige manométrique.

La fixation amovible du module 6 sur le couvercle 2 peut être effectuée par tout système de fixation connu, par exemple du type système à quart de tour ou à clavette.

De façon préférentielle, le module 6 est fixé au couvercle 2 par l'intermédiaire d'un système vis-écrou 22, 23 à serrage progressif coopérant avec une ouverture de fixation 22B ménagée dans le couvercle 2.

De façon préférentielle, l'ouverture de fixation 22B est ménagée sensiblement au centre du couvercle 2.

Afin d'assurer l'étanchéité de cette fixation amovible, la vis ou axe fileté 22 est cerclé(e) préférentiellement par un joint d'étanchéité 22A.

Le positionnement de l'écrou 23 à l'intérieur du couvercle est préféré, car ainsi la désolidarisation du module 6 ne peut s'effectuer que lorsque l'autocuiseur est ouvert, ce qui assure une meilleure sécurité d'utilisation. Le caractère progressif du serrage permet quant à lui l'obtention d'une sécurité par décompression graduelle, en cas de dévissage alors que l'appareil est sous pression.

De façon particulièrement avantageuse, le module 6 est fixé en un point unique du couvercle 2, préférentiellement au centre de ce dernier, centre qui correspond à la zone de plus forte déformation du couvercle 2 sous l'action de la pression. Un tel montage permet de réaliser une sécurité ultime à la surpression. En effet, lorsque l'autocuiseur monte en pression, le couvercle 2 se bombe et présente une flèche maximum, qui peut atteindre plusieurs millimètres, en son centre, entraînant à cet endroit le module 6 avec lui. Ce dernier étant fixé en un point unique au centre du couvercle 2, il n'épouse pas la déformation du couvercle 2, au point que si cette déformation est trop importante, ce qui est le cas lors de la survenue d'une surpression interne anormale, un ou plusieurs des organes de sécurité, de régulation, de commande ou de pilotage monté au sein du module va se trouver éloigné de l'ouverture correspondante ménagée dans le couvercle 2, au point de ne plus être en communication étanche avec cette dernière, ce qui occasionne une fuite de vapeur, et donc une fuite de pression dans l'intérieur de l'enceinte de cuisson.

La valeur de la pression interne à laquelle cette sécurité ultime à la surpression se met en oeuvre est ajustable en jouant sur différents paramètres, dont :
- la distance entre le point de fixation du module 6 sur le couvercle 2 et la ou les ouverture(s) ménagée(s) dans le couvercle,
- la position sur le couvercle 2 du point de fixation du module 6, et de la ou les ouverture(s) ménagée(s) dans le couvercle 2,
- les propriétés mécaniques et géométriques du couvercle 2 (module d'élasticité, forme...),
- l'altitude de fixation de la ou des moyens formant soupape(s) dans le module 6.

Il est particulièrement intéressant que la fuite de pression soit occasionnée pour une déformation du couvercle 2, qui appartienne au domaine élastique.

De cette façon, le couvercle de l'autocuiseur n'est pas endommagé par une déformation plastique irréversible, voire une rupture, et peut être réutilisé une fois la cause de la surpression identifiée et supprimée.

Un mode de réalisation particulièrement avantageux de l'autocuiseur selon l'invention va être décrit dans ce qui suit.

Selon cette version particulièrement avantageuse de l'appareil de cuisson conforme à l'invention, les mâchoires 3 sont au nombre de deux, et sont montées mobiles radialement sur le couvercle 2, de préférence en opposition, par deux bras entraîneurs 5 respectifs, entre la position de verrouillage et la position de déverrouillage. Lesdits bras entraîneurs 5 sont pourvus chacun d'un ergot axial de guidage 10A, 10B. Les bras entraîneurs 5 peuvent présenter une longueur suffisante, de manière à pouvoir être superposés, au moins en partie, lors de leur déplacement radial. Dans ce cas, les bras entraîneurs 5 sont autoguidés radialement l'un dans l'autre, un premier bras formant le bras mâle, l'autre formant le bras femelle, le bras mâle coulissant dans le bras femelle.

De manière préférentielle, le guidage du mouvement linéaire et radial des bras entraîneurs 5 est assuré par des moyens de guidage supplémentaires qui sont solidaires du couvercle 2. Selon une variante préférentielle, les moyens de guidage supplémentaires sont formés par une pièce de support 25, qui enserre les bras entraîneurs 5 sur une partie de leur longueur.

De façon encore plus préférentielle, la pièce support 25 est formée d'une plaque de section transversale en U, enserrant et recouvrant les bras entraîneurs 5, la face interne de l'âme du U étant tournée vers le couvercle 2. Dans ce cas, il n'est pas nécessaire que les bras entraîneurs se superposent ou entrent en contact.

Avantageusement, le moyen d'entraînement 5 est monté à coulissement élastique relativement au couvercle 2, de telle sorte que sa position de rappel élastique correspond au verrouillage de la au moins une mâchoire 3.

Dans le cas préféré où le moyen d'entraînement 5 est formé de deux bras entraîneurs guidés en translation et montés en opposition, il est avantageux de relier les extrémités internes respectives desdits bras par un moyen élastique de rappel (non visible aux figures), par exemple un ressort qui est agencé de façon à rappeler les bras entraîneurs l'un vers l'autre, chacun dans une direction radiale centripète. Sous l'effet de cette force de rappel, les mâchoires 3 sont ainsi maintenues en position stable de verrouillage.

De façon préférentielle, les ergots de guidage 10A, 10B sont constitués de plots cylindriques et sont situés aux extrémités des bras entraîneurs 5 les plus proches du centre du couvercle 2.

Avantageusement, le module comprend un siège 18 présentant une face interne 18A et une face externe 18B opposée, laquelle face externe 18B assure l'interface avec le couvercle 2 lorsque le module 6 est rapporté et fixé sur celui-ci. Ledit siège 18 est pourvu :
- de la soupape de sécurité à la surpression 16,
- de la soupape de régulation de pression 12, munie d'un système de tarage ajustable par l'utilisateur 14,
- d'un conduit de sortie de vapeur 13, débutant en aval de la soupape de régulation de pression 12 et au voisinage duquel est monté le capteur de température 15,
- d'un ensemble monobloc incluant le moyen de purge d'air intégré dans la tige manométrique 21.

Les différentes soupapes ou organes de sécurité susmentionnés font de préférence saillie de la face externe 18B. Ceci permet d'assurer une fonction de contrôle pour le positionnement correct du module 6. En effet, dans le cas où le module 6 serait positionné de façon impropre sur le couvercle 2, les moyens mâles constitués par les diverses soupapes précédemment citées, ne se trouveraient pas en regard des ouvertures correspondantes 12B, 16B, 21 B, de sorte que le module 6 ne pourrait être monté sur le couvercle 2.

Le siège 18 est également pourvu d'un axe de fixation 22 s'étendant sensiblement à partir de la face externe 18B, de préférence à partir du centre de cette dernière, pour assurer la fixation amovible du module 6 sur le couvercle 2. Cet axe de fixation 22 est cerclé d'un joint d'étanchéité 22A pour assurer, en coopération avec l'ouverture de fixation 22B, une fixation étanche.

Le siège 18 comprend également un axe de montage 19 s'étendant sensiblement à partir de la face interne 18A, de préférence à partir du centre de celle-ci. Sur cet axe de montage 19 est montée en rotation une plaque formant volant 17 en tant que pièce de transmission intermédiaire, laquelle plaque formant volant 17 est pourvue de deux lumières oblongues de manoeuvre 17A, 17B, disposées symétriquement par rapport à l'axe de montage 19. Lesdites lumières oblongues de manoeuvre 17A, 17B peuvent présenter, tel que cela est illustré à la figure 3, une forme arrondie sensiblement en arc de cercle.

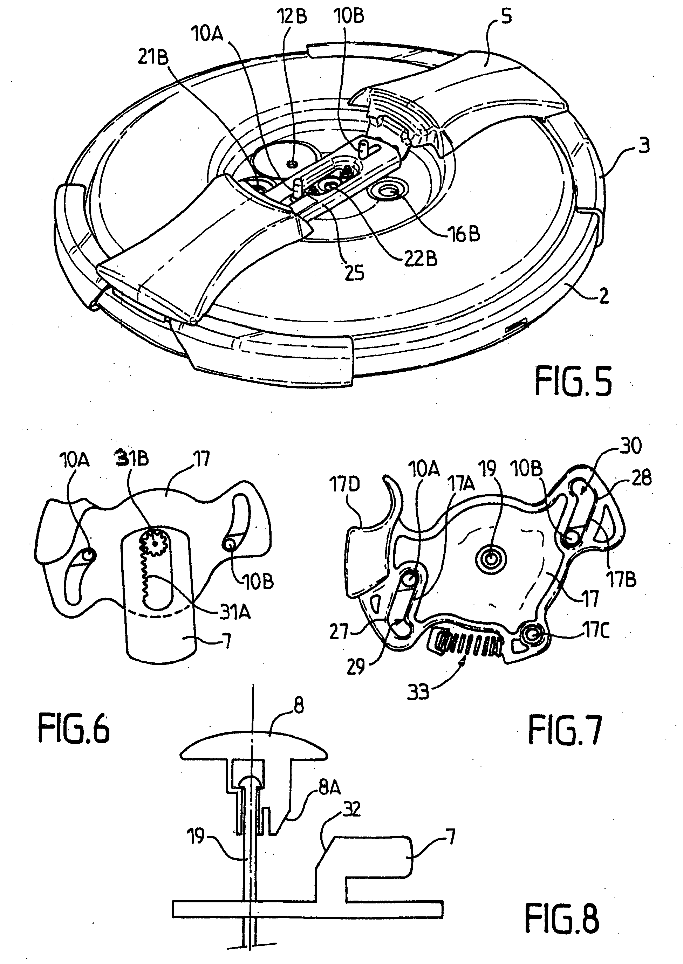

Selon un mode de réalisation préféré de l'invention illustré à la figure 7, les lumières oblongues de manoeuvre 17A, 17B comprennent chacune une partie sensiblement rectiligne s'étendant en oblique par rapport à la direction radiale, ladite partie rectiligne formant à l'une de ses extrémités un coude 27, 28 rentrant vers l'intérieur de la plaque 17, c'est-à-dire vers l'axe de rotation de celle-ci.

Les lumières oblongues de manoeuvre 17A, 17B présentent ainsi une forme sensiblement en L, mais dont les bras forment entre eux un angle obtus (supérieur à 90°), de préférence très ouvert.

Les lumières oblongues de manoeuvre définissent respectivement, en conjonction avec deux lumières oblongues rectilignes 19A, 19B ménagées radialement dans le siège 18, deux ouvertures d'engagement 20A, 20B de chacun desdits ergots de guidage 10A, 10B. De façon préférentielle, les ouvertures d'engagement 20A, 20B sont alignées avec le point de pivotement de la plaque formant volant 17.

Un tel agencement permet ainsi un interfaçage mécanique particulièrement simple et compact entre le module 6 et le couvercle 2. Avantageusement, le siège 18 est également pourvu d'un bouton poussoir d'ouverture 7 en tant que moyen de commande principal, ledit bouton poussoir d'ouverture 7 étant monté mobile radialement par rapport à l'axe de montage 19, et formant un poussoir radial.

De façon préférentielle, le bouton poussoir d'ouverture 7 est guidé en translation radiale par une lumière de guidage 7B, elle-même guidée par l'axe de montage 19. Le bouton poussoir d'ouverture 7 comporte un orifice oblong d'entraînement 7A, qui s'étend en oblique par rapport à la direction radiale, et coopère avec un pion de guidage 17C solidaire de la plaque formant volant 17, de façon à ce qu'un déplacement radial du bouton poussoir d'ouverture 7 induise une rotation de la plaque formant volant 17, laquelle rotation provoque un déplacement radial des ouvertures d'engagement 20A, 20B, lesquelles ouvertures entraînent les ergots de guidage 10A, 10B, et donc les bras 5 et mâchoires 3, jusqu'à la position de déverrouillage.

Il est également possible, à titre de variante, de remplacer le système d'entraînement formé par l'orifice oblong d'entraînement 7A et le pion de guidage 17C, par un système d'entraînement comprenant une crémaillère 31A agencée sur un des côtés de la lumière de guidage 7B. Tel que cela est représenté à la figure 6, ladite crémaillère 31A est positionnée de façon à coopérer avec une roue dentée 31 B montée solidaire de la plaque formant volant 17, au niveau du point de pivotement de celle-ci, qui de préférence appartient à l'axe de symétrie X-X'.

Ainsi, la présence d'une pièce intermédiaire rotative permet de transformer le mouvement radial du bouton poussoir d'ouverture 7 en un mouvement des mâchoires selon une autre direction radiale quelconque. La configuration représentée à la figure 3 n'est donnée en effet qu'à titre d'exemple. La fonction de renvoi d'angle qu'assure la plaque formant volant 17 est réalisable quelle que soit l'orientation de mobilité radiale du bouton poussoir d'ouverture 7 par rapport à celle des mâchoires 3.

La plaque formant volant 17 permet également de procurer à l'utilisateur une réduction de l'effort à exercer sur le bouton poussoir 7 pour déplacer les mâchoires 3.

Cette démultiplication d'effort dépend du rapport d'une part de la distance entre l'orifice oblong d'entraînement 7A et l'axe de montage 19, et d'autre part de la distance entre les ouvertures d'engagement 20A, 20B et l'axe de montage 19.

Le niveau de démultiplication peut donc être aisément ajusté en jouant sur les paramètres de distance cités ci-dessus.

Avantageusement, la pièce de transmission intermédiaire 17 est montée à rotation élastique relativement au couvercle 2, de telle sorte que sa position de rappel élastique correspond au verrouillage de la au moins une mâchoire 3.

De façon préférentielle, la pièce de transmission intermédiaire 17 est montée à rotation élastique à l'encontre d'un ressort de compression 33, tel que cela est représenté à la figure 7. L'une des extrémités du ressort de compression 33 est ainsi solidaire, directement ou indirectement, du couvercle 2, tandis que son autre extrémité vient engager la pièce de transmission intermédiaire 17, et exercer ainsi une force sensiblement tangentielle en périphérie de ladite pièce de transmission intermédiaire 17, de façon à maintenir celle-ci dans la position correspondant au verrouillage de la au moins une mâchoire 3.

De façon préférentielle, la plaque formant volant 17 comporte des moyens de blocage réversibles 29, 30 de sa rotation, lorsqu'elle est en position de déverrouillage.

De façon particulièrement avantageuse, tel que cela est illustré à la figure 7, les lumières oblongues de manoeuvre 17A, 17B sont conformées pour présenter un coude 27, 28 respectif, lequel coude 27, 28 forme le moyen de blocage réversible 29, 30. Chaque coude 27, 28 occasionne une aspérité 29, 30 respective formant butée susceptible de constituer un moyen de blocage réversible du moyen d'entraînement 5 en position de déverrouillage. En effet, sous l'action de la force de rappel du ressort liant les bras entraîneurs 5, entre eux, les ergots de guidage 10A, 10B subissent une force centripète, qui en conjonction avec le décroché respectif formant aspérité 29, 30, permet d'obtenir un blocage de la pièce de transmission intermédiaire 17 dans une position stable de déverrouillage.

Le désarmement de cette position de déverrouillage est obtenu en exerçant une poussée sur un bouton poussoir de fermeture mobile axialement, formant poussoir axial 8. Une surface inclinée 8A, solidaire du poussoir axial 8, vient en effet pousser une surface complémentaire 32 liée au poussoir radial 7, la force exercée étant suffisante pour éloigner, par effet de « *coin* »*,* le poussoir radial 7 suffisamment au point que les ergots de guidage 10A, 10B passent au delà de l'aspérité respective 29, 30 et finissent ensuite leur course automatiquement, sous l'action conjointe du ressort de compression 33 et du ressort de rappel des bras entraîneurs, jusqu'au fond de l'extrémité opposée des lumières oblongues de manoeuvre 17A, 17B, pour atteindre une position de verrouillage stable, représentée à la figure 7. De façon préférentielle, le poussoir axial 8 est soumis à l'action d'un moyen élastique, par exemple un ressort axial de compression (non représenté) qui le maintient au repos en position haute, c'est-à-dire dans une position où la surface d'engagement 8A ne coopère pas avec la surface complémentaire 32.

Le dispositif de commande du verrouillage / déverrouillage est ainsi préférentiellement un système à retour automatique en position de fermeture, sous l'action de l'utilisateur sur le poussoir axial formant gâchette.

Le module 6 comprend d'autre part un capot supérieur 26 qui coiffe le siège 18 et tous les éléments qui y sont montés. Ce capot 26 comprend au moins un logement de réception 11C du minuteur 11, doté d'au moins un plot de connexion électrique 11 D relié fonctionnellement au capteur de température 15. Le capot supérieur 26 comprend également le bouton poussoir de fermeture mobile axialement 8, qui comporte des moyens de relâchement pour commander le désarmement des moyens de blocage réversibles de la rotation de la plaque formant volant 17.

Avantageusement, le module 6 est globalement conformé de façon à pouvoir être utilisé comme un ensemble de préhension du couvercle 2, lorsqu'il est monté sur celui-ci.

A titre de variante complémentaire, il est bien évidemment également possible, sans sortir du cadre de l'invention, de réaliser un dispositif de commande du verrouillage / déverrouillage, qui comporte un unique organe de commande principal capable d'assurer à lui seul la commande dans les deux sens du déplacement radial des bras entraîneurs 5.

Les bras entraîneurs 5 et mâchoires 3 peuvent également comporter des plaques d'habillage les recouvrant dans leur ensemble, lesdites plaques d'habillage étant conformées de façon à assurer une continuité esthétique et protectrice avec le module 6, lorsque ce dernier est rapporté et fixé au couvercle 2.

Le fonctionnement de l'appareil de cuisson conforme à l'invention est le suivant.

La mise en place du module 6 sur le couvercle 2 nécessite de faire pénétrer l'axe de fixation 22 dans l'ouverture correspondante 22B ménagée dans le couvercle 2. La soupape de régulation 12, l'ensemble monobloc intégrant le doigt de sécurité et le moyen de purge 21, et la soupape de sécurité à la surpression 16 s'engagent alors concomitamment respectivement dans les ouvertures de régulation 12B, de sécurité 21 B et de décompression 16B, ces ouvertures étant disposées de façon non symétrique, de façon à ne permettre qu'un unique positionnement possible du module 6.

La fixation du module 6 sur le couvercle 2 est ensuite rendue effective par le vissage de l'écrou 23 du côté de l'intérieur du couvercle 2. L'écrou 23 est de préférence conformé de façon à pouvoir être serré à la main.

Sous l'action du ressort de rappel liant les bras entraîneurs 5, les ergots verticaux de guidage 10A, 10B sont situés au repos dans une position correspondant à la fermeture des mâchoires 3, c'est-à-dire qu'ils sont dans leur position la plus proche du centre du couvercle 2.

Sous l'effet du ressort de compression la liant au siège 18 du module 6, la plaque formant volant 17 est positionnée, au repos, dans une position telle que les ouvertures 20A, 20B sont situées respectivement en regard des ergots axiaux de guidage 10A, 10B.

Ainsi, lors de l'accostage du module 6 sur le couvercle 2, les ergots axiaux de guidage 10A, 10B pénètrent respectivement dans les ouvertures d'engagement 20A, 20B, réalisant ainsi la jonction dynamique entre les poussoirs de commande 7, 8 et les bras entraîneurs 5 et mâchoires 3.

La mise en place du couvercle 2 sur la cuve 1 nécessite l'ouverture des mâchoires 3, qui est obtenue par l'actionnement radial centripète du poussoir radial d'ouverture 7. Le déplacement progressif du poussoir 7 permet de faire coulisser le pion 17C dans la lumière d'entraînement 7A, ce qui a pour effet de faire tourner la plaque formant volant 17 dans le sens horaire. La rotation de la plaque 17 provoque le coulissement des ergots de guidage 10A, 10B dans les lumières curvilignes 17A, 17B ménagées dans la plaque 17, le déplacement des ergots de guidage 10A, 10B étant limité par ailleurs latéralement par les lumières rectilignes 19A, 19B ménagées radialement dans le siège 18 du module 6. Les ergots 10A, 10B sont ainsi entraînés uniquement en translation radiale vers la périphérie de l'autocuiseur, selon une direction centrifuge. Les ergots 10A, 10B étant liés aux bras entraîneurs 5, ces derniers coulissent radialement jusqu'à la position d'ouverture des mâchoires 3. Dans la position ainsi atteinte, les ergots de guidage 10A, 10B coopèrent avec les coudes 27, 28 correspondants des lumières 17A, 17B. Les mâchoires 3 sont ainsi en position stable de déverrouillage et permettent ainsi un centrage du couvercle 2 sur le bord de la cuve 1.

La fermeture de l'enceinte de cuisson, c'est-à-dire l'atteinte par les mâchoires 3 de leur position de verrouillage, est obtenue par pression de la paume de la main sur le bouton axial 8. Son enfoncement provoque un mouvement radial centrifuge du poussoir radial 7, par interaction entre les surfaces inclinées complémentaires 8A, 32 liées respectivement au poussoir axial 8 et au poussoir radial 7. Le déplacement centrifuge du poussoir radial 7 provoque, par la coopération du pion 17C et de la lumière d'entraînement 7A, une rotation de la plaque formant volant 17 dans le sens anti-horaire, de sorte que les ergots de guidage 10A, 10B sont libérés des moyens de blocage réversibles 29, 30, ce qui autorise sous l'action des ressorts de compression 33 et de rappel des bras entraîneurs, le retour élastique de la plaque 17 et donc des mâchoires 3 en position stable de verrouillage.

Ainsi, il est facile d'ôter le module 6 sur lequel sont regroupées toutes les fonctions pour l'utilisateur, et de disposer ainsi du couvercle 2 « *nu* », tel que représenté à la figure 5. Le couvercle 2, composé majoritairement de pièces métalliques, peut alors être lavé au lave-vaisselle, indépendamment du module 6, qui d'ailleurs de par son positionnement à l'extérieur du couvercle lors du fonctionnement de l'autocuiseur, est beaucoup moins sujet aux salissures que le couvercle 2.

## Revendications

1. Appareil de cuisson d'aliments sous pression comportant au moins :
- une cuve (1) et un couvercle (2) destiné à être rapporté et verrouillé sur ladite cuve (1) pour former une enceinte de cuisson étanche,
- une ou plusieurs mâchoire(s) (3) pour verrouiller le couvercle (2) relativement à la cuve (1),
- un moyen d'entraînement (5) de ladite au moins une mâchoire (3) entre une position de verrouillage et une position de déverrouillage,
**caractérisé en ce qu'**il comprend un module (6) destiné à être rapporté et fixé de façon amovible sur le couvercle (2), ledit module (6) comprenant au moins d'une part un dispositif de commande du verrouillage /déverrouillage (7, 8, 17) du couvercle (2) relativement à la cuve (1) et d'autre part au moins l'un des éléments suivants: un minuteur (11) monté de façon amovible ou non sur le module (6), une soupape de régulation de pression (12), un capteur de pression et/ou un capteur de température (15), une soupape de sécurité à la surpression (16), un moyen de sécurité à la fermeture / ouverture (21), un moyen de fuite bistable.

2. Appareil de cuisson selon la revendication 1 **caractérisé en ce que** ladite soupape de régulation de pression (12) :
- est agencée au sein du module de façon à être en communication étanche avec une ouverture de régulation ménagée (12B) dans le couvercle (2),
- est sensible à la pression régnant dans l'enceinte de cuisson,
- et est montée mobile entre deux positions stables de butée, la première dans laquelle elle ferme la communication de l'enceinte avec l'extérieur tant que la pression interne est inférieure à une pression prédéterminée P₁, la deuxième dans laquelle elle met en communication l'intérieur de l'enceinte avec l'extérieur par une sortie de vapeur (13), dès que la pression interne atteint sensiblement la pression prédéterminée P₁.

3. Appareil de cuisson selon la revendication 1 **caractérisé en ce que** ledit capteur de température (15) est disposé au voisinage de la sortie de vapeur (13), pour permettre de capter l'augmentation de température résultant du passage de la vapeur à travers la sortie de vapeur (13).

4. Appareil de cuisson selon la revendication 3 **caractérisé en ce que** le capteur de température (15) est relié fonctionnellement au minuteur (11), de manière à assurer son déclenchement dès la captation de l'augmentation de température.

5. Appareil de cuisson selon l'une des revendications 1 à 4 **caractérisé en ce que** ladite soupape de sécurité à la surpression (16) :
- est agencée au sein du module (6) de façon à être en communication étanche avec une ouverture de décompression (16B) ménagée dans le couvercle (2),
- est sensible à la pression régnant dans l'enceinte de cuisson,
- et est montée mobile entre deux positions stables de butée, la première dans laquelle ladite soupape de sécurité (16) ferme la communication de l'enceinte avec l'extérieur tant que la pression interne est inférieure à une pression prédéterminée P₂, la deuxième dans laquelle elle met en communication l'intérieur de l'enceinte avec l'extérieur, dès que la pression interne atteint sensiblement la pression prédéterminée P₂.

6. Appareil de cuisson selon l'une des revendications 1 à 5 **caractérisé en ce que** le module (6) incorpore le moyen d'entraînement (5) de la au moins une mâchoire (3).

7. Appareil de cuisson selon l'une des revendications 1 à 6 **caractérisé en ce que** le module (6) incorpore la au moins une mâchoire (3).

8. Appareil de cuisson selon l'une des revendications 1 à 7 **caractérisé en ce que :**
- la au moins une mâchoire (3) est montée mobile en translation par au moins un bras entraîneur respectif (5), entre la position de verrouillage et la position de déverrouillage,
- le dispositif de commande du verrouillage / déverrouillage (7, 8, 17) comprend un organe de commande principal (7) monté mobile en translation et une pièce de transmission intermédiaire (17) positionnée en rotation libre relativement à l'organe de commande principal (7) et au moyen d'entraînement, de manière à être entraînée en rotation par l'organe de commande principal (7) pour engager le moyen d'entraînement (5), de façon à en régir son déplacement.

9. Appareil de cuisson selon l'une des revendications 1 à 8 **caractérisé en ce que** ledit moyen de sécurité à la fermeture / ouverture (21) est agencé au sein du module (6) de façon à être en communication étanche avec une ouverture de sécurité (21 B) ménagée dans le couvercle (2), la position dudit moyen de sécurité à la fermeture /ouverture (21) étant sensible à la pression ou à la température régnant dans l'enceinte de cuisson, ledit moyen de sécurité (21) étant monté mobile entre deux positions stables de butée, la première dans laquelle ledit moyen de sécurité (21) met en communication l'intérieur de l'enceinte avec l'extérieur en deçà d'une pression interne P₃ prédéterminée, la seconde dans laquelle il ferme la communication de l'enceinte avec l'extérieur lorsque la pression P₃ est atteinte, pour permettre la montée en pression de l'appareil et la cuisson.

10. Appareil de cuisson selon les revendications 8 et 9 **caractérisé en ce que** la pièce de transmission intermédiaire (17) est conformée de façon à coopérer avec le moyen de sécurité (21) pour que ce dernier empêche la rotation de la pièce de transmission intermédiaire (17) et donc le déverrouillage du couvercle (2) lorsque la pression interne est supérieure ou égale à la pression P₃, ladite pièce de transmission intermédiaire (17) étant également conformée pour empêcher le moyen de sécurité (21) d'atteindre sa position dans laquelle il ferme la communication de l'enceinte avec l'extérieur, lorsque la pièce de transmission intermédiaire (17) se trouve dans une position autre que celle correspondant au verrouillage.

11. Appareil de cuisson selon l'une des revendications 1 à 10 **caractérisé en ce que** ledit moyen de fuite bistable :
- est agencé au sein du module de façon à être en communication étanche avec une ouverture de fuite ménagée dans le couvercle,
- et est susceptible de prendre d'une part une position d'ouverture autorisant une fuite d'air de l'intérieur de l'enceinte de cuisson vers l'extérieur, ou d'autre part une position de fermeture correspondant à une absence de fuite d'air vers l'extérieur.

12. Appareil de cuisson selon l'une des revendications 1 à 11 **caractérisé en ce que** le moyen de fuite bistable est intégré dans le moyen de sécurité (21).

13. Appareil de cuisson selon la revendication 12 **caractérisé en ce que** le moyen de fuite bistable est intégré dans une tige manométrique formant le moyen de sécurité (21) et comporte en tant qu'élément d'obturation mobile un bilame supporté par ladite tige manométrique.

14. Appareil de cuisson selon l'une des revendications 1 à 13 **caractérisé en ce que** le moyen de fuite bistable est un moyen de purge de l'air de l'appareil.

15. Appareil de cuisson selon l'une des revendications 1 à 14 **caractérisé en ce que** le module est fixé au couvercle par l'intermédiaire d'un système vis-écrou (22, 23) à serrage progressif coopérant avec une ouverture de fixation (22B) ménagée dans le couvercle (2).

16. Appareil de cuisson selon la revendication 15 **caractérisé en ce que** l'ouverture de fixation (22B) est ménagée sensiblement au centre du couvercle.

17. Appareil de cuisson selon l'une des revendications 1 à 16 **caractérisé en ce que** les mâchoires (3) sont au nombre de deux, et sont montées mobiles radialement sur le couvercle (2) par deux bras entraîneurs (5) respectifs, entre la position de verrouillage et la position de déverrouillage, lesdits bras entraîneurs (5) étant pourvus chacun d'un ergot axial de guidage (10A, 10B), et **en ce que** le module (6) comprend d'une part un siège (18) présentant une face interne (18A) et une face externe (18B) opposée, laquelle assure l'interface avec le couvercle (2) lorsque le module (6) est rapporté et fixé sur celui-ci, ledit siège (18) étant pourvu :
- de la soupape de sécurité à la surpression (16),
- de la soupape de régulation de pression (12) munie d'un système de tarage ajustable par l'utilisateur (14),
- d'un conduit de sortie de vapeur (13) débutant en aval de la soupape de régulation de pression (12) et au voisinage duquel est monté le capteur de température (15),
- d'un ensemble monobloc incluant le moyen de purge d'air intégré dans une tige manométrique formant moyen de sécurité à la fermeture / ouverture (21),
- d'un axe de fixation (22) s'étendant sensiblement à partir du centre de la face externe, pour assurer la fixation amovible du module (6) sur le couvercle (2),
- d'un axe de montage (19) s'étendant sensiblement à partir du centre de la face interne (18A), et sur lequel est montée en rotation une plaque formant volant (17) en tant que pièce de transmission intermédiaire, laquelle plaque formant volant (17) est pourvue de deux lumières oblongues de manoeuvre (17A, 17B) disposées symétriquement par rapport à l'axe de montage (19), lesdites lumières oblongues de manoeuvre (17A, 17B) définissant respectivement en conjonction avec deux lumières oblongues rectilignes (19A, 19B) ménagées radialement dans le siège (18), deux ouvertures d'engagement (20A, 20B) de chacun desdits ergots de guidage (10A, 10B),
- d'un bouton poussoir d'ouverture (7) monté mobile radialement par rapport à l'axe de montage (19) et comportant un orifice oblong d'entraînement (7A) s'étendant en oblique par rapport à la direction radiale, et coopérant avec un pion de guidage (17C) solidaire de la plaque formant volant (17), de façon à ce qu'un déplacement radial du bouton poussoir d'ouverture (7) induise une rotation de la plaque formant volant (17), laquelle rotation provoque un déplacement radial des ouvertures d'engagement (20A, 208), lesquelles entraînent les ergots de guidage (10A, 10B) et donc les bras (5) et mâchoires (3), jusqu'à la position de déverrouillage,
et d'autre part un capot supérieur (26) qui coiffe le siège (18) et tous les éléments qui y sont montés et comprenant au moins :
- un logement de réception (11C) du minuteur (11) doté d'au moins un plot de connexion électrique (11 D) relié fonctionnellement au capteur de température (15),
- un bouton poussoir de fermeture (8) mobile axialement.

18. Module (6) destiné à être utilisé et monté sur un couvercle (2) d'appareil de cuisson sous pression, ce dernier comportant au moins :
- une cuve (1) et un couvercle (2) destiné à être rapporté et verrouillé sur ladite cuve (1) pour former une enceinte de cuisson étanche,
- une ou plusieurs mâchoire(s) (3) pour verrouiller le couvercle (2) relativement à la cuve (1),
- un moyen d'entraînement (5) de ladite au moins une mâchoire (3) entre une position de verrouillage et une position de déverrouillage,
ledit module (6) étant **caractérisé en ce qu'**il est destiné à être rapporté et fixé de façon amovible sur le couvercle (2), et **en ce qu'**il comprend au moins d'une part un dispositif de commande du verrouillage /déverrouillage (7, 8, 17) du couvercle (2) relativement à la cuve (1) et d'autre part au moins l'un des éléments suivants: un minuteur (11) monté de façon amovible ou non sur le module (6), une soupape de régulation de pression (12), un capteur de pression et/ou un capteur de température (15), une soupape de sécurité à la surpression (16), un moyen de sécurité à la fermeture / ouverture (21), un moyen de fuite bistable.

## Claims

1. An appliance for cooking food under pressure, the appliance comprising at least:
• a vessel (1) and a lid (2) for being fitted and locked on said vessel (1) in order to form a leaktight cooking enclosure;
• one or more jaws (3) for locking the lid (2) relative to the vessel (1); and
• drive means (5) for driving said at least one jaw (3) between a locking position and an unlocking position;
the appliance being **characterized in that** it includes a module (6) for fitting on and releasably securing to the lid (2), said module (6) including on the one hand at least a device (7, 8, 17) for controlling locking and unlocking of the lid (2) relative to the vessel (1) and on the other hand at least one of the following elements: a timer (11) optionally removably mounted on the module (6), a pressure regulator valve (12), a pressure sensor and/or a temperature sensor (15), an excess pressure safety valve (16), opening/closing safety means (21), bistable leakage means.

2. A cooking appliance according to claim 1, **characterized in that** said pressure regulator valve (12):
• is arranged within the module so as to be in leaktight communication with a regulator opening (12B) formed through the lid (2);
• is responsive to the pressure that exists inside the cooking enclosure; and
• and is mounted to move between two stable abutment positions, a first position in which it closes off communication from the enclosure to the outside so long as the internal pressure is less than a predetermined pressure P₁, and a second position in which it puts the inside of the enclosure into communication with the outside via a steam outlet (13) as soon as the internal pressure reaches substantially the predetermined pressure P₁.

3. A cooking appliance according to claim 1, **characterized in that** the temperature sensor (15) is disposed in the vicinity of the steam outlet (13) so as to sense the increase in temperature that results from steam passing through the steam outlet (13).

4. A cooking appliance according to claims 3, **characterized in that** the temperature sensor (15) is functionally connected to the timer (11) so as to cause it to be triggered as soon as the temperature rise is sensed.

5. A cooking appliance according to any one of claims 1 to 4, **characterized in that** said excess pressure safety valve (16):
• is arranged within the module (6) so as to be in leaktight communication with a pressure relief opening (16B) formed through the lid (2);
• is responsive to the pressure that exists inside the cooking enclosure; and
• is mounted to move between two stable abutment positions, a first position in which said safety valve (16) closes off communication from the enclosure to the outside so long as the internal pressure is below a predetermined pressure P₂, and a second position in which it puts the inside of the enclosure into communication with the outside as soon as the internal pressure reaches substantially the predetermined pressure P₂.

6. A cooking appliance according to any one of claims 1 to 5, **characterized in that** the module (6) incorporates the drive means (5) for driving the at least one jaw (3).

7. A cooking appliance according to any one of claims 1 to 6, **characterized in that** the module (6) incorporates the at least one jaw (3).

8. A cooking appliance according to any one of claims 1 to 7, **characterized in that:**
• the at least one jaw (3) is mounted to be moved in translation by at least one respective drive arm (5) between the locking position and the unlocking position; and
• the device (7, 8, 17) for controlling locking and unlocking comprises a main control member (7) mounted to move in translation and an intermediate transmission part (17) positioned to turn freely relative to the main control member (7) and to the drive means, so as to be turned by the main control member (7) in order to engage the drive means (5) so as to govern the displacement thereof.

9. A cooking appliance acccording to any one of claims 1 to 8, **characterized in that** said opening/closing safety means (21) are arranged within the module (6) so as to be in leaktight communication with a safety opening (21B) formed through the lid (2), the position thereof being responsive to the pressure or the temperature that exists in the cooking enclosure, said safety means (21) being mounted to move between two stable abutment positions, a first position in which said safety means (21) puts the inside of the enclosure into communication with the outside below a predetermined internal pressure P₃, and a second position in which it closes off communication from the enclosure to the outside when the pressure P₃ is reached, in order to enable the pressure inside the appliance to rise and cooking to take place.

10. A cooking appliance according to claims 8 and 9, **characterized in that** the intermediate transmission part (17) is shaped so as to co-operate with the safety means (21) so that said means prevent the intermediate transmission part (17) from turning and thus prevent the lid (2) from being unlocked while the internal pressure is greater than or equal to the pressure P₃, said intermediate transmission part (17) also being shaped to prevent the safety means (21) from reaching its position in which it closes off communication from the enclosure to the outside when said intermediate transmission part (17) is in a position other than its position corresponding to locking.

11. A cooking appliance according to any one of claims 1 to 10, **characterized in that** said bistable leakage means:
• are arranged within the module so as to be in leaktight communication with a leak opening formed through the lid; and
• are suitable for taking up firstly an open position allowing air to leak from the inside of the cooking enclosure to the outside, and a closed position corresponding to no leakage of air to the outside.

12. A cooking appliance according to claims 1 to 11 **characterized in that** the bistable leakage means are integrated in the safety means (21).

13. A cooking appliance according to claim 12, **characterized in that** the bistable leakage means are integrated in a pressure gauge rod and include, as a moving shutter element, a bimetallic strip supported by said pressure gauge rod.

14. A cooking appliance according to any one of claims 1 to 13, **characterized in that** the bistable leakage means are means for venting air from the appliance.

15. A cooking appliance according to any one of claims 1 to 14, **characterized in that** the module is fixed to the lid by means of a screw-and-nut system (22, 23) that tightens progressively in co-operation with a fastening opening (22B) formed through the lid (2).

16. A cooking appliance according to claim 15, **characterized in that** the fastening opening (22B) is formed substantially at the center of the lid.

17. A cooking appliance according to claims 1 to 16, **characterized in that** there are two jaws (3) mounted to move radially on the lid (2) by two respective drive arms (5) between the locking position and the unlocking position, each of said drive arms (5) being provided with an axial guide stud (10A, 10B), and **in that** the module (6) comprises firstly a seat (18) presenting an inside face (18A) and an opposite outside face (18B), which seat provides the interface with the lid (2) when the module (6) is fitted on and secured to the lid, said seat (18) being provided:
• with the excess pressure safety valve (16);
• with the pressure regulator valve (12) provided with a user-adjustable rating system (14);
• with a steam outlet duct (13) starting downstream from the pressure regulator valve (12) and having the temperature sensor (15) mounted in the vicinity thereof;
• with a one-pieae assembly including the air venting means integrated in the pressure gauge rod (21);
• with a fixing pin (22) extending substantially from the center of the outside face in order to secure the module (6) releasably to the lid (2);
• with an assembly pin (19) extending substantially from the center of the inside face (18A), and on which there is pivotally mounted a pivoting plate (17) as an intermediate transmission part, which pivoting plate (17) is provided with two oblong drive slots (17A, 17B) disposed symmetrically about the assembly axis (19), said oblong drive slots (17A, 17B) co-operating with two respective rectilinear oblong slots (19A, 19B) formed radially in the seat (18) to define two engagement openings (20A, 20B) for engaging each of said guide studs (10A, 10B); and
• with an opening pushbutton (7) mounted to move radially relative to the assembly axis (19) and including an oblong drive orifice (7A) extending obliquely relative to the radial direction and co-operating with a guide peg (17C) secured to the pivoting plate (17) so that radial displacement of the opening pushbutton (7) causes the pivoting plate (17) to turn, thereby causing the engagement openings (20A, 20B) to move radially and entrain the guide studs (10A, 10B) and thus the arms (5) and the jaws (3) to the unlocking position;
and secondly a top cap (26) which covers the seat (18) and all of the elements that are mounted therewith, and comprising at least:
• a housing (11C) for receiving the timer (11) provided with at least one electrical connection tab (11D) functionally connected to the temperature sensor (15); and
• an axially movable closure pushbutton (8).

18. A module (6) for a food cooking appliance for being used and mounted on a lid (2) of an appliance for cooking under pressure, the latter comprising at least:
• a vessel (1) and a lid (2) for being fitted and locked on said vessel (1) in order to form a leaktight cooking enclosure;
• one or more jaws (3) for locking the lid (2) relative to the vessel (1); and
• drive means (5) for driving said at least one jaw (3) between a locking position and an unlocking position;
the appliance being **characterized in that** it includes a module (6) for fitting on and releasably securing to the lid (2), said module (6) including on the one hand at least a device (7, 8, 17) for controlling locking and unlocking of the lid (2) relative to the vessel (1) and on the other hand at least one of the following elements: a timer (11) optionally removably mounted on the module (6), a pressure regulator valve (12), a pressure sensor and/or a temperature sensor (15), an excess pressure safety valve (16), opening/closing safety means (21), bistable leakage means.

## Patentansprüche

1. Dampfdruck-Kochgerät mit mindestens Folgendem:
- einem Behälter (1) und einem Deckel (2), der dazu bestimmt ist, auf den Behälter (1) aufgesetzt und verriegelt zu werden, um einen dichten Gareinschluss zu bilden,
- einer oder mehreren Backen (3) zum Verriegeln des Deckels (2) auf dem Behälter (1),
- einem Mittel (5) zum Antreiben der mindestens einen Backe (3) zwischen einer Verriegelungsposition und einer Entriegelungsposition, **dadurch gekennzeichnet, dass** es mindestens ein Modul (6) aufweist, das dazu bestimmt ist, auf den Deckel (2) aufgesetzt und abnehmbar an ihm befestigt zu werden, wobei das Modul (6) mindestens einerseits eine Steuervorrichtung des Ver-/Entriegelns (7, 8, 17) des Deckels (2) von dem Behälter (1) und, andererseits, mindestens eines der folgenden Elemente aufweist: Minutenzählwerk (11), das abnehmbar oder nicht auf dem Modul (6) montiert ist, ein Druckregelventil (12), einen Drucksensor und/oder einen Temperatursensor (15), ein Überdruck-Sicherheitsventil (16), ein Mittel zum Absichern des Schließens/Öffnens (21), ein bistabiles Lenkmittel.

2. Kochgerät nach Anspruch 1, **dadurch gekennzeichnet, dass** das Druckregelventil (12):
- innerhalb des Moduls derart eingerichtet ist, dass es in dichter Kommunikation mit einer Regelöffnung (12B) in dem Deckel (2) eingerichtet ist,
- auf den Druck, der in dem Garneinschluss herrscht, reagiert,
- zwischen zwei stabilen Anschlagpositionen beweglich montiert ist, der ersten, in welcher es die Kommunikation des Einschlusses mit der Außenseite solange schließt, wie der Innendruck niedriger ist als ein vorbestimmter Druck P₁, der zweiten, in der es das Innere des Einschlusses mit der Außenseite über einen Dampfausgang (13) in Verbindung bringt, sobald der Innendruck im Wesentlichen den vorbestimmten Druck P₁ erreicht.

3. Kochgerät nach Anspruch 1, **dadurch gekennzeichnet, dass** der Temperatursensor (15) in der Nähe des Dampfausgangs (13) angeordnet ist, um das Erfassen des Ansteigens der Temperatur, das durch das Durchgehen des Dampfs durch den Dampfausgang (13) entsteht, zu erlauben.

4. Kochgerät nach Anspruch 3, **dadurch gekennzeichnet, dass** der Temperatursensor (15) funktional mit den Minutenzählwerk (11) derart verbunden ist, dass sein Auslösen ab dem Erfassen des Temperaturanstiegs sichergestellt ist.

5. Kochgerät nach einem der Ansprüche 1 bis 4, **dadurch gekennzeichnet, dass** das Überdruck-Sicherheitsventil (16) :
- innerhalb des Moduls (6) derart eingerichtet ist, dass es in dichter Kommunikation mit einer Druckableitöffnung (16B), die in dem Deckel (2) eingerichtet ist, ist,
- auf den Druck, der in dem Gareinschluss herrscht, reagiert,
- und zwischen zwei stabilen Anschlagpositionen beweglich ist, der ersten, in der das Sicherheitsventil (16) die Kommunikation des Einschlusses mit der Außenseite solange schließt, wie der Innendruck niedriger ist als ein vorbestimmter Druck P₂, der zweiten, in der es das Innere des Einschlusses mit der Außenseite in Kommunikation bringt, sobald der Innendruck im Wesentlichen den vorbestimmten Druck P₂ erreicht.

6. Kochgerät nach einem der Ansprüche 1 bis 5, **dadurch gekennzeichnet, dass** das Modul (6) das Antriebsmittel (5) der mindestens einen Backe (3) enthält.

7. Kochgerät nach einem der Ansprüche 1 bis 6, **dadurch gekennzeichnet, dass** das Modul (6) mindestens eine Backe (3) umfasst.

8. Kochgerät nach einem der Ansprüche 1 bis 7, **dadurch gekennzeichnet, dass:**
- die mindestens eine Backe (3) in Verschiebung durch mindestens einen jeweiligen Antriebsarm (5) zwischen der Verriegelungsposition und der Entriegelungsposition beweglich montiert ist,
- die Steuervorrichtung des Verriegelns/Entriegelns (7, 8, 17) ein Hauptsteuerorgan (7) aufweist, das in Verschiebung beweglich montiert ist, und einen Zwischenübertragungsteil (17), der in Drehung frei in Bezug zu dem Hauptsteuerorgan (7) und dem Antriebsmittel derart positioniert ist, dass er durch das Hauptsteuerorgan (7) in Drehung angetrieben wird, um in das Antriebsmittel (5) derart einzugreifen, dass er dessen Bewegung steuert.

9. Kochgerät nach einem der Ansprüche 1 bis 8, **dadurch gekennzeichnet, dass** das Mittel zum Absichern beim Schließen/Öffnen (21) innerhalb des Moduls (6) derart eingerichtet ist, dass es in dichter Kommunikation mit einer Sicherheitstiffnung (213) ist, die in dem Deckel (2) eingerichtet ist, wobei die Position des Absicherungsmittels beim Schließen/Öffnen (21) auf den Druck oder die Temperatur reagiert, die in dem Gareinschluss herrscht, wobei das Absicherungsmittel (21) zwischen zwei stabilen Anschlagpositionen beweglich montiert ist, der ersten, in der das Absicherungsmittel (21) das Innere des Einschlusses mit der Außenseite über einen vorbestimmten Innendruck P₃ hinaus in Kommunikation bringt, der zweiten, in der es die Kommunikation des Einschlusses mit der Außenseite schließt, wenn der Druck P₃ erreicht wird, um den Druckaufbau des Geräts und das Garen zu erlauben.

10. Kochgerät nach den Ansprüchen 8 und 9, **dadurch gekennzeichnet, dass** der Zwischenübertragungsteil (17) derart ausgebildet ist, dass er mit dem Absicherungsmittel (21) zusammenwirkt, so dass dieses Letztere das Drehen des Zwischenübertragungsteils (17) und daher das Entriegeln des Deckels (2) verhindert, wenn der Innendruck größer oder gleich dem Druck P₃ ist, wobei der Zwischenübertragungsteil (17) auch ausgebildet ist, um das Absicherungsmittel (21) daran zu hindern, seine Position zu erreichen, in welcher es die Kommunikation des Einschlusses mit der Außenseite schließt, wenn sich der Zwischenübertragungsteil (17) in einer anderen Position als der, die dem Verriegeln entspricht, befindet.

11. Kochgerät nach einem der Ansprüche 1 bis 10, **dadurch gekennzeichnet, dass** das bistabile Leckmittel:
- innerhalb des Moduls derart eingerichtet ist, dass es in dichter Kommunikation mit einer in dem Deckel eingerichteten Lecköffnung ist,
- und einerseits eine Öffnungsposition einnehmen kann, die ein Luftleck von der Innenseite des Gareinschlusses nach außen gestattet, oder, andererseits, eine Schließposition, die einem Fehlen eines Luftlecks nach außen entspricht.

12. Kochgerät nach einem der Ansprüche 1 bis 11, **dadurch gekennzeichnet, dass** das bistabile Leckmittel in das Absicherungsmittel (21) integriert ist.

13. Kochgerät nach Anspruch 12, **dadurch gekennzeichnet, dass** das bistabile Leckmittel in einen Druckmesserschaft eingebaut ist, der das Absicherungsmittel (21) bildet, und als bewegliches Verschlusselement ein Bimetallelement aufweist, das von dem Druckmesserschaft getragen wird.

14. Kochgerät nach einem der Ansprüche 1 bis 13, **dadurch gekennzeichnet, dass** das bistabile Leckmittel ein Luftentleerungsmittel des Geräts ist.

15. Kochgerät nach einem der Ansprüche 1 bis 14, **dadurch gekennzeichnet, dass** das Modul an dem Deckel über ein Schrauben-Mutter-System (22, 23) mit allmählichem Festziehen befestigt ist, das mit einer Befestigungsöffnung (22B), die in dem Deckel (2) eingerichtet ist, zusammenwirkt.

16. Kochgerät nach Anspruch 15, **dadurch gekennzeichnet, dass** die Befestigungsöffnung (22B) im Wesentlichen in der Mitte des Deckels eingerichtet ist.

17. Kochgerät nach einem der Ansprüche 1 bis 16, **dadurch gekennzeichnet, dass** es zwei Backen (3) hat, die radial auf dem Deckel (2) durch zwei jeweilige Antriebsarme (5) zwischen der Verriegelungsposition und der Entriegelungsposition beweglich montiert sind, wobei die Antriebsarme (5) jeweils mit einem axialen Führungsdorn (10A, 10B) versehen sind, und dass das Modul (6) einerseits einen Sitz (18) aufweist, der eine Innenseite (18A) und eine entgegen gesetzte Außenseite (18B) aufweist, die die Schnittstelle mit dem Deckel (2) sicherstellt, wenn das Modul (6) aufgesetzt und auf diesem befestigt wird, wobei der Sitz (18) mit Folgendem versehen ist:
- dem Überdruck-Sicherheitsventil (16),
- dem Druckregelventil (12), das mit einem Tariersystem (14), das der Benutzer einstellen kann, versehen ist,
- einer Dampfausgangsleitung (13), die stromabwärts des Druckregelventils (12) beginnt, und in dessen Nähe der Temperatursensor (15) montiert ist,
- einer einstückigen Einheit, die das in dem Druckmesserschaft, der das Zjbsicherungsmittel beim Schließen/Öffnen (21) bildet, integrierte Luftableitmittel umfasst,
- einer Befestigungsachse (22), die sich im Wesentlichen ausgehend von der Mitte der Außenseite erstreckt, um das abnehmbare Befestigen des Moduls (6) auf dem Deckel (2) sicherzustellen,
- einer Montageachse (19), die sich im Wesentlichen ausgehend von der Mitte der Innenseite (18A) erstreckt, und auf die in Drehung eine Platte, die ein Schwungrad (17) bildet, als Zwischenübertragungsteil montiert ist, wobei die das Schwungrad (17) bildende Platte mit zwei Betätigunglanglöchern (17A, 17B) versehen ist, die symmetrisch in Bezug zu der Montageachse (19) angeordnet sind, wobei die Betätigungslanglöcher (17A, 17B) jeweils in Verbindung mit zwei geradlinigen Langlöchern (19A, 19B), die radial in dem Sitz (18) eingerichtet sind, zwei Einführöffnungen (20A, 20B) jedes der Führungsdorne (10A, 10B) definierten,
- einem öffnungsdruckknopf (7), der radial in Bezug zu der Montageachse (19) beweglich montiert ist und eine längliche Antriebsöffnung (7A) aufweist, die sich schräg zu der radialen Richtung erstreckt und mit einem Führungsstift (17C) zusammenwirkt, der fest mit der ein Schwungrad (17) bildenden Platte derart verbunden ist, dass eine radiale Verlagerung des Öffnungsdruckknopfs (7) eine Drehung der ein Schwungrad bildenden Platte (17) bewirkt, wobei die Drehung eine radiale Verlagerung der Eingriffsöffnungen (20A, 20B) bewirkt, die die Führungsdorne (10A, 10B) und daher die Arme (5) und Backen (3) bis zu der Entriegelungsposition antreiben,
und andererseits eine obere Haube (26), die auf dem Sitz (18) sitzt und alle Elemente, die darauf montiert sind, und mindestens Folgendes:
- eine Aufnahme (11C) des Minutenzählwerks (11), versehen mit mindestens einem elektrischen Anschluss (11D), der funktional mit dem Temperatursensor (15) verbunden ist,
- eine Schließdrucktaste (8), die axial montiert ist.

18. Modul (6), das dazu bestimmt ist, auf einen Deckel (2) eines Dampfdruck-Kochgeräts benutzt und montiert zu werden, wobei Letzteres mindestens Folgendes aufweist:
- einen Behälter (1) und einen Deckel (2), der dazu bestimmt ist, auf dem Behälter (1) aufgesetzt und verriegelt zu werden, um einen dichten Gareinschluss zu bilden,
- eine oder mehrere Backen (3), um den Deckel (2) auf dem Behälter (1) zu verriegeln,
- ein Mittel zum Antreiben (5) der mindestens einen Platte (3) zwischen einer Verriegelungsposition und einer Entriegelungsposition,
wobei das Modul (6) **dadurch gekennzeichnet ist, dass** es dazu bestimmt ist, abnehmbar auf dem Deckel (2) aufgesetzt und auf diesem befestigt zu werden, und dass es mindestens einerseits eine Steuervorrichtung des Verriegelns/Entriegelns (7, 8, 17) des Deckels (2) auf dem Behälter (1) und andererseits mindestens eines der folgenden Elemente aufweist: ein Minutenzählwerk (11), das abnehmbar oder nicht auf dem Modul (6) montiert ist, ein Druckregelventil (12), einen Drucksensor und/oder einen Temperatursensor (15), ein Überdruck-Sicherheitsventil (16), ein Absicherungsmittel beim Schließen/Öffnen (21), ein bistabiles Leckmittel.
